# FASCICULE DE BREVET EUROPEEN

(11) **EP 4 041 690 B1**
(45) Date de publication et mention de la délivrance du brevet: **26.07.2023**
(21) Numéro de dépôt: 20785542.0
(22) Date de dépôt: 08.10.2020
(51) Int. Cl.: C03C 17/34

(54) **VITRAGE ISOLANT COMPRENANT DES COUCHES D'ITO ET DE NITRURE DE NIOBIUM**
ISOLIERVERGLASUNG MIT SCHICHTEN AUS ITO UND NIOBNITRID
INSULATING GLAZING COMPRISING LAYERS OF ITO AND NIOBIUM NITRIDE

(30) Priorité: 10.10.2019 FR 1911278
(43) Date de publication de la demande: 17.08.2022
(73) Titulaire: Saint-Gobain Glass France, 92400 Courbevoie (FR)
(72) Inventeur: AGUIAR, Rosiana, 78180 MONTIGNY LE BRETONNEUX (FR); ABADIE, Sacha, 93500 PANTIN (FR)
(74) Mandataire: Saint-Gobain Recherche
(86) Numéro de dépôt international: PCT/EP2020/078326
(87) Numéro de publication internationale: WO 2021/069616

(56) Documents cités:
- WO-A1-01/21540
- WO-A1-2014/127867
- WO-A1-2019/111273
- WO-A2-2009/112759
- US-A1- 2005 079 369

## Description

L'invention concerne les vitrages isolants dits de contrôle solaire, munis d'empilements de couches minces dont au moins l'une est fonctionnelle, c'est-à-dire qu'elle agit sur le rayonnement solaire et/ou thermique essentiellement par réflexion et/ou absorption du rayonnement infrarouge proche (solaire) ou lointain (thermique). La présente invention concerne plus particulièrement les vitrages à couche(s) notamment ceux destinés principalement à l'isolation thermique des bâtiments.

On entend par couche(s) "fonctionnelle(s)" ou encore « active(s) », au sens de la présente demande, la (ou les) couche(s) de l'empilement qui confère(nt) à l'empilement l'essentiel de ses propriétés thermiques. Le plus souvent les empilements en couches minces équipant le vitrage lui confèrent des propriétés améliorées de contrôle solaire essentiellement par les propriétés intrinsèques de cette ou ces couche(s) active(s). Une couche fonctionnelle agit sur le flux de rayonnement solaire traversant ledit vitrage, par opposition aux autres couches, généralement en matériau diélectrique et ayant pour fonction une protection chimique ou mécanique de ladite couche fonctionnelle ou un ajustement de la couleur.

De tels vitrages munis d'empilements de couches minces agissent sur le rayonnement solaire incident soit essentiellement par l'absorption du rayonnement incident par la couche fonctionnelle, soit essentiellement par réflexion par cette même couche.

Ils sont regroupés sous la désignation de vitrage de contrôle solaire. Ils sont commercialisés et utilisés essentiellement soit pour assurer essentiellement une protection de l'habitation du rayonnement solaire et en éviter une surchauffe, de tels vitrages étant qualifiés dans le métier d'antisolaire, soit essentiellement pour assurer une isolation thermique de l'habitation et éviter les déperditions de chaleur, ces vitrages étant qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle. Pour mesurer les propriétés d'isolation énergétique des vitrages, on utilise dans le domaine le facteur solaire noté FS ou g dans le domaine.

De manière connue le facteur solaire g est égal au rapport de l'énergie traversant le vitrage (c'est-à-dire entrant dans le local) et de l'énergie solaire incidente. Plus particulièrement, il correspond à la somme du flux transmis directement à travers le vitrage et du flux absorbé par le vitrage (en y incluant les empilements de couches éventuellement présents à l'une de ses surfaces) puis éventuellement réémis vers l'intérieur (le local).

En outre pour estimer la capacité d'un vitrage à réfléchir et/ou absorber les radiations infrarouges solaire (compris entre 1 micron et 30 microns) tout en laissant passer les radiations dans le domaine du visible (comprise entre 380 et 780 nm), il est courant de considérer le rapport T_{L}/g, souvent appelé sélectivité dans le domaine et où T_{L} est la transmission lumineuse.

De bonnes propriétés d'isolation thermique exigent ainsi en premier lieu une résistivité faible de la couche fonctionnelle. Une telle propriété se traduit cependant également par une absorption lumineuse plus importante, qui tend à diminuer sensiblement la transmission lumineuse au sein du vitrage. L'objet de la présente invention est tout d'abord de proposer un vitrage muni d'un empilement présentant un bon compromis entre sa transmission lumineuse et ses propriétés d'isolation thermique.

D'une manière générale, toutes les caractéristiques lumineuses présentées dans la présente description, en particulier, la transmission lumineuse T_{L} et la réflexion lumineuse R_{L}, ainsi que le facteur g, sont obtenues selon les principes et méthodes décrits dans la norme NF EN 410 (2011) se rapportant à la détermination des caractéristiques lumineuses et énergétiques des vitrages utilisés dans le verre pour la construction.

Idéalement, de tels vitrages doivent présenter une coloration sensiblement neutre autant en transmission qu'en réflexion, que ce soit sur la face du vitrage sur lequel l'empilement est déposé (côté intérieur) ou sur la face opposée (côté extérieur). Les empilements les plus performants commercialisés à l'heure actuelle incorporent au moins une couche métallique du type Argent fonctionnant essentiellement sur le mode de la réflexion d'une majeure partie du rayonnement IR (infrarouge) incident. Ces empilements sont ainsi utilisés principalement en tant que vitrages du type bas émissifs (ou low-e en anglais) pour l'isolation thermique des bâtiments. Ces couches sont cependant très sensibles à l'humidité et à l'oxydation. Elles sont donc exclusivement utilisées dans des doubles vitrages, en face 2 ou 3 de celui-ci, pour être protégées de l'humidité. Il n'est ainsi pas possible de déposer de telles couches sur des vitrages simples (aussi appelés monolithiques). Les empilements selon l'invention ne comprennent pas de telles couches à base d'argent, ou encore à base d'or ou de platine, ou alors en quantités très négligeables, notamment sous formes d'impuretés inévitables.

De même les couches fonctionnelles, voire les empilements, des articles verriers selon l'invention sont en principe exempt de nickel ou Cuivre.

On connait également des empilements à propriétés bas émissives ou antisolaire mais basés sur des couches fonctionnelles en oxydes transparents conducteurs (TCO) comme les oxydes mixtes d'étain et d'indium, comme par exemple les empilements décrits dans la publication US2009320824. Cependant, pour obtenir des vitrages dont le facteur solaire est sensiblement inférieur à 50%, il est nécessaire de déposer des épaisseurs de couches d'au moins 100 nm. Le dépôt de telles couches par les techniques de pulvérisation assistée par magnétron est donc long et coûteux.

D'autres couches métalliques à fonction antisolaire ont également été reportées dans le domaine, comprenant des couches fonctionnelles du type Nb métallique ou niobium nitruré NbN, tel que décrit par exemple dans la demande WO01/21540 ou encore dans la demande WO2009/112759. Au sein de couches de niobium notamment de niobium nitruré, le rayonnement solaire est cette fois majoritairement absorbé de manière non sélective par la couche fonctionnelle, le rayonnement IR (c'est-à-dire dont la longueur d'onde est compris entre environ 780 nm et 2500 nm) et le rayonnement visible (dont la longueur d'onde est compris entre environ et 380 et 780 nm) étant absorbés sans distinction par la couche active. L'utilisation de niobium métallique entraîne de fortes valeurs de la réflexion interne des vitrages équipés de tels empilements.

Le document WO 2019/111273 A1 décrit des revêtements avec des couches métalliques à fonctions antisolaires.

En plus des propriétés antisolaires, dans le domaine du bâtiment ou même de l'automobile, il est également important que non seulement le vitrage peu coloré en transmission et en réflexion intérieure à l'occupant de l'habitat ou de l'habitacle. Pour obtenir une telle neutralité, il est nécessaire que celui-ci soit peu coloré, c'est-à-dire non seulement que les valeurs de a* et b* dans le système L, a*, b* soit peu élevées aussi bien en transmission qu'en réflexion intérieure, c'est-à-dire typiquement inférieures ou égales à 10 ou idéalement inférieur à 5 en valeurs absolues, mais également que la réflexion lumineuse interne soit la moins élevée possible.

De manière générale, il est nécessaire dans de tels vitrages de limiter au maximum la réflexion intérieure (c'est-à-dire la réflexion de la lumière sur la surface interne du vitrage positionné dans le bâtiment ou de l'habitacle, c'est-à-dire sur la face du vitrage où est déposé l'empilement de couches).

Pour résoudre en combinaison de tels problèmes, il est nécessaire de proposer des articles verriers dont les caractéristiques lumineuses sont adaptées.

En particulier, le problème décrit précédemment a pu être résolu selon l'invention grâce à la mise au point d'articles verriers dont la majorité et le plus souvent la totalité des critères suivants sont réunis :
- la transmission lumineuse est supérieure ou égale à 15%,
- la réflexion lumineuse côté empilement (interne) R_{Lint} est inférieure ou égale à 20%, voire inférieure ou égale à 15%, ou même inférieure à 10%,
- les paramètres a* et b* en transmission, dans le système colorimétrique L, a*, b* sont inférieurs à 10 et de préférence sont inférieurs à 5.
- de préférence, les paramètres a* et b* en réflexion interne, sont inférieurs à 10 et de préférence sont inférieurs à 5, dans le système colorimétrique L, a*, b*.

Selon l'invention, les paramètres L, a* et b* sont mesurées selon les critères CIELAB, sous un angle de 10° et l'illuminant D65.

Par côté empilement on entend la face du vitrage sur laquelle est déposée l'empilement. Par côté verre on entend la face du vitrage opposée à celle sur laquelle est déposée l'empilement, en principe non recouverte. Au sens de la présente invention, les termes « face extérieure » (ou « externe ») et « face intérieure» ou (« interne ») font référence à la position du vitrage lorsque celui-ci équipe le bâtiment ou le véhicule auquel il est destiné.

En outre les articles verriers et vitrages selon l'invention présentent des propriétés d'isolation énergétique conformes à celles requises dans le domaine, en particulier un facteur solaire g proche de 50% et de préférence inférieur à 50%, voire inférieur à 45% ou même inférieur à 40% dans certaines configurations.

L'objet de la présente invention est de proposer un article verrier permettant de résoudre les problèmes techniques décrits précédemment.

Plus précisément, la présente invention se rapporte à un article verrier transparent, comprenant au moins un substrat de verre muni sur au moins une de ses faces d'un revêtement constitué par un empilement de couches minces, ledit revêtement comprenant la succession de couches suivantes, par référence à la surface dudit substrat :
- une première couche comprenant du nitrure de niobium,
- une couche comprenant un oxyde transparent conducteur, en particulier un oxyde d'indium et d'étain,
- une deuxième couche comprenant du nitrure de niobium,
dans lequel lesdites première et deuxième couches comprenant du nitrure de niobium sont directement au contact de la couche comprenant un oxyde transparent conducteur.

Selon des modes de réalisations particuliers et préférés de la présente invention, qui peuvent être le cas échéant combinés entre eux :
- La couche comprenant un oxyde transparent conducteur a une épaisseur comprise entre 5 nm et 400 nm, de préférence comprise entre 10 et 200 nm, notamment entre 15 et 100 nm, par exemple entre 20 et 70 nm.
- La première couche comprenant du nitrure de niobium a une épaisseur comprise entre 1 et 50 nm, de préférence encore comprise entre 2 et 30 nm.
- La seconde couche comprenant du nitrure de niobium a une épaisseur comprise entre 1 et 50 nm, de préférence encore comprise entre 2 et 20 nm.
- L'oxyde transparent conducteur est choisi parmi les oxydes d'indium et d'étain (ITO), les oxydes de zinc et d'aluminium (AZO) les oxydes d'étain et d'antimoine (ATO), les oxydes d'indium et de zinc (IZO), de préférence les oxydes d'indium et d'étain (ITO).
- L'oxyde transparent conducteur est choisi parmi on oxyde d'étain dopé pour le rendre conducteur, de préférence dopé par un élément de préférence choisi parmi F, Sb, Al, Ag, de préférence encore dopé par le fluor ou l'antimoine.
- La couche comprenant un oxyde transparent conducteur est plus épaisse que les première et seconde couches comprenant du nitrure de niobium.
- L'empilement ne comprend pas de couches fonctionnelles à base d'Ag, Au, Pt, Cu, Ni ou d'acier inoxydable.
- Au moins une couche d'un matériau diélectrique, de préférence comprenant du nitrure de silicium ou à base de nitrure de silicium, est disposée au-dessus de ladite succession de couches, par référence à la surface dudit substrat.
- Au moins une couche d'un matériau diélectrique, de préférence comprenant du nitrure de silicium ou à base de nitrure de silicium, est disposée au-dessous de ladite succession de couches, par référence à la surface dudit substrat.
- Le matériau diélectrique est choisi parmi les nitrures, en particulier le nitrure de silicium et le nitrure d'aluminium et leurs mélanges ou les oxydes, en particulier l'oxyde de silicium, l'oxyde de titane, l'oxyde d'étain, l'oxyde de zinc et leurs mélanges.
- Une couche comprenant du nitrure de silicium est disposé au-dessus et/ou en dessous de ladite succession de couches.
- L'empilement comprend ou est constitué par la succession des couches suivantes, chaque couche étant au contact direct de la suivante :

   SiNₓ/NbNₓ/TCO/NbNₓ/SiNₓ

   dans lequel SiNₓ désigne des couches comprenant du nitrure de silicium, NbNₓ désigne des couches comprenant du nitrure de niobium et TCO désigne une couches comprenant un oxyde transparent conducteur, l'oxyde transparent conducteur étant de préférence un oxyde d'indium et d'étain. Comme indiqué précédemment, la formulation SiNₓ est une formulation générale pour désigner une couche comprenant du nitrure de silicium ou à base de nitrure de silicium, la valeur de x étant bien entendu susceptible de varier sensiblement de la valeur stoechiométrique (4/3) correspondant à une formulation Si₃N₄, par exemple en raison de la présence d'éléments dopants comme l'aluminium ou encore de conditions de dépôt particulières menant à une sur ou à une sous-stoechiométrie.
- Au moins une couche comprenant un oxyde métallique est présente entre la surface du substrat verrier et ladite succession de couches, l'oxyde métallique étant de préférence choisi parmi l'oxyde de silicium ou l'oxyde de titane.
- Au moins une couche comprenant un oxyde métallique est présente au-dessus de ladite succession de couches, l'oxyde métallique étant de préférence choisi parmi l'oxyde de silicium, l'oxyde de titane, l'oxyde de zirconium ou un mélange de ces oxydes.
- L'article est trempé thermiquement et/ou bombé.

L'invention se rapporte également à un panneau de parement de façade de type allège incorporant au moins un article tel que précédemment décrit.

Dans toute la description, les épaisseurs sont des épaisseurs physiques, sauf indication contraire.

Dans les couches selon l'invention comprenant du nitrure de silicium, le nitrure de silicium représente de préférence au moins 50% poids desdites couches, sur la base d'une formulation Si₃N₄, et de préférence plus de 80 % ou même plus de 90 % desdites couches, sur la base de la formulation Si₃N₄. De préférence encore, lesdites couches sont constituées essentiellement de nitrure de silicium, mais peuvent comprendre également de l'aluminium. L'aluminium est utilisé de façon bien connue, dans des proportions pouvant aller jusqu'à 10% atomique voire plus, dans les cibles de silicium servant pour le dépôt par pulvérisation cathodique assisté par un champ magnétique (magnétron) des couches contenant du silicium, notamment les couches à base de nitrure de silicium.

Dans les couches selon l'invention comprenant du nitrure de niobium, le nitrure de niobium NbNₓ représente de préférence au moins 50% poids desdites couches, et de préférence plus de 80 % ou même plus de 90 % desdites couches. Dans la formulation NbNₓ selon l'invention, x peut varier par exemple entre 0 et 1, de préférence entre 0 exclu et 0,9, par exemple entre 0,3 et 0,7.

La formulation des couches et en particulier la valeur de x, peut être obtenue classiquement par spectrométrie photoélectronique XPS, selon des techniques bien connues dans le domaine des matériaux. Selon un mode préféré de réalisation de l'invention, lesdites couches sont de préférence constituées essentiellement de nitrure de niobium, ou même sont constituées de nitrure de niobium, aux impuretés inévitables près.

La couche comprenant du nitrure de niobium peut comprendre en outre une faible quantité d'oxygène, par exemple tel que le rapport atomique O/Nb soit inférieur à 0,2, de préférence inférieur à 0,1. Selon un mode préféré toutefois, les couches comprenant du nitrure de niobium ne comprennent pas d'oxygène autrement que sous forme d'impuretés inévitables.

Dans une couche selon l'invention comprenant un oxyde d'indium et d'étain (ITO), l'oxyde ITO représente de préférence plus de 50% poids de la couche, et de préférence plus de 80 % ou même plus de 90 % de ladite couche. Selon un mode préféré de réalisation de l'invention, lesdites couches sont de préférence constituées essentiellement d'ITO, ou même sont constituées d'ITO, aux impuretés inévitables près.

Au sens de la présente invention on entend par oxyde transparent conducteur (ou TCO selon l'acronyme habituellement utilisé dans le domaine), toute couche connue pour présenter une conductivité suffisante pour permettre leur utilisation comme couche fonctionnelle antisolaire ou bas-émissive permettant la réflexion et/ou l'absorption des infrarouges, en particulier de l'infrarouge solaire (compris entre 800 et 2500 nm).

On entend également par oxyde d'indium et d'étain (ou encore oxyde d'indium dopé à l'étain ou ITO pour l'appellation anglaise : Indium Tin Oxide) un oxyde mixte ou un mélange obtenu à partir des oxydes d'indium(III) (In₂O₃) et d'étain (IV) (SnO₂), de préférence dans les proportions massiques comprises entre 70 et 95% pour le premier oxyde et 5 à 20% pour le second oxyde. Une proportion massique typique est d'environ 90 % massique d'In₂O₃ pour environ 10 % massique de SnO₂.

Les revêtements selon l'invention sont de façon classique déposés par des techniques de dépôt du type pulvérisation sous vide assistée par champ magnétique d'une cathode du matériau ou d'un précurseur du matériau à déposer, souvent appelée technique de la pulvérisation magnétron dans le domaine. Une telle technique est aujourd'hui classiquement utilisée notamment lorsque le revêtement à déposer est constitué d'un empilement plus complexe de couches successives d'épaisseurs de quelques nanomètres ou quelques dizaines de nanomètres.

La présente invention se rapporte également à un panneau de parement de façade de type allège incorporant au moins un vitrage tel que précédemment décrit ou à une vitre latérale, une vitre arrière ou un toit pour automobile ou autre véhicule constitué par ou incorporant ledit vitrage.

Selon l'invention, les couches fonctionnelles selon l'invention permettent d'obtenir une valeur de la transmission lumineuse du substrat relativement élevée, apte permettant la vision depuis l'intérieur vers l'extérieur sans gêne, tout en conservant un effet isolant thermique notable.

Par les termes « sous couche et « sur-couche », il est fait référence dans la présente description à la position respective desdites couches par rapport à la ou les couches fonctionnelles dans l'empilement, ledit empilement étant supporté par le substrat verrier pris comme référence.

En particulier, la sous couche est généralement la couche au contact du substrat verrier et la surcouche est la couche la plus externe de l'empilement, tournée à l'opposé du substrat.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière. L'invention et ses avantages sont décrits avec plus de détails, ci-après, au moyen des exemples non limitatifs ci-dessous, selon l'invention et comparatifs. Dans tous les exemples et la description, les épaisseurs données sont physiques.

Tous les substrats sont en verre clair de 6 mm d'épaisseur de type Planilux^{®} commercialisé par la société Saint-Gobain Glass France.

Toutes les couches sont déposées de façon connue par pulvérisation cathodique assistée par champ magnétique (souvent appelé magnétron).

De façon bien connue, les différentes couches successives sont déposées dans les compartiments successifs du dispositif de pulvérisation cathodique, chaque compartiment étant muni d'une cible métallique spécifique en Si, ou Nb choisie pour le dépôt d'une couche spécifique de l'empilement.

Plus précisément, les couches en nitrure de silicium sont déposées dans un premier compartiment du dispositif à partir d'une cible de silicium métallique (dopé avec 8% en masse d'aluminium), dans une atmosphère réactive contenant de l'azote (40% Ar et 60% N₂). Les couches en nitrure de silicium, notées Si₃N₄ par commodité, contiennent donc un peu d'aluminium. Ces couches sont désignées par la suite selon la formulation générale classique Si₃N₄, même si la couche déposée ne répond pas forcément à cette stoechiométrie supposée.

Les couches de NbNₓ sont obtenues par pulvérisation d'une cible en niobium métallique dans une atmosphère comprenant un mélange d'azote et d'argon, selon les conditions décrites dans la publication WO01/21540 ou encore dans publication WO2009/112759.

Les couches en ITO sont déposées à partir de la pulvérisation d'une cible céramique oxyde comprenant de l'étain et de l"indium dans des proportions massique 90/10 dans une atmosphère comprenant un mélange d'oxygène et d'argon selon des techniques bien connues de l'art.

### Exemples 1 à 4 selon l'invention :

Dans tous les exemples 1 à 4 qui suivent, le substrat verrier a ainsi été recouvert successivement d'un empilement de couches comprenant une couche d'ITO entourée par des couches de nitrure de niobium et de Si₃N₄. Dans ces exemples, l'empilement est donc constitué d'une couche d'ITO encapsulé de deux couches de nitrure de niobium et de deux couches de nitrure de silicium selon la séquence suivante :

Si₃N₄/NbNₓ/ ITO/NbNₓ/ Si₃N₄

Différents empilement sont synthétisés pour ajuster le facteur solaire et la transmission lumineuse selon différentes configurations possibles recherchées dans le domaine du bâtiment.

Ainsi dans l'exemple 1 on configure les épaisseurs des différentes couches de manière à obtenir un vitrage présentant un faible facteur solaire tandis que pour l'exemple 5, on cherche au contraire à maximiser la transmission lumineuse du visible à travers le vitrage.

Les articles verriers ainsi synthétisés selon les techniques classiques sont ensuite chauffés et trempés selon les techniques classiques dans le domaine (chauffage à 620°C pendant 10 minutes suivi d'une trempe).

Le tableau 1 ci-dessous regroupe les informations concernant la constitution des empilements antisolaires selon les exemples 1 à 5 selon l'invention, depuis la surface du verre :

**[Tableaux 1]**

| | Epaisseur 1^{ère} couche Si₃N₄ | Epaisseur 1^{ère} Couche NbNₓ | Epaisseur Couche ITO | Epaisseur 2^{ème} Couche NbNₓ | Epaisseur 2^{ème} couche Si₃N₄ |
|---|---|---|---|---|---|
| Exemple 1 | 100 | 14 | 41 | 6 | 18 |
| Exemple 2 | 53 | 9 | 50 | 11 | 56 |
| Exemple 3 | 60 | 6 | 55 | 8 | 41 |
| Exemple 4 | 5 | 3 | 20 | 2 | 23 |

Les valeurs de transmission lumineuse T_{L} et des réflexions lumineuses externes et internes Rₑₓₜ et Rᵢₙₜ, , sont mesurées dans la gamme 380 nm à 780 nm selon les méthodes décrites dans la norme NF EN 410 (2011). Cette même norme est également utilisée pour mesurer le facteur solaire g du substrat muni de son empilement.

Les résultats obtenus sont regroupés dans le tableau 2 qui suit, en pourcentages :

**[Tableaux 2]**

| | T_{L} | R_{Lext} | R_{Lint} | g | T_{L}/g |
|---|---|---|---|---|---|
| Exemple 1 | 20 | 21 | 9 | 27 | 0,74 |
| Exemple 2 | 22 | 5 | 3 | 29 | 0,76 |
| Exemple 3 | 30 | 7 | 8 | 39 | 0,78 |
| Exemple 4 | 51 | 22 | 18 | 54 | 0,94 |

Les valeurs colorimétriques en transmission, en réflexion interne et en réflexion externe selon la norme L, a*, b* sont reportées dans le tableau 3 qui suit :

**[Tableaux 3]**

| | a*TL | b*_{TL} | a*_{RLext} | b*_{RLext} | a*_{RLint} | b*_{RLint} |
|---|---|---|---|---|---|---|
| Exemple 1 | 0,2 | 4,4 | -7,6 | 0,2 | 1,8 | -7,7 |
| Exemple 2 | 0,6 | -0,1 | 0,0 | -2,9 | -8,9 | 0,0 |
| Exemple 3 | 0,6 | 0,8 | -5,4 | -1,6 | -2,6 | -6,3 |
| Exemple 4 | -1,1 | -0,2 | -3,1 | -4,9 | -0,7 | 1,5 |

Les résultats reportés dans les tableaux qui précédent montre que les vitrages obtenus à partir des exemples 1 à 3 présentent un facteur solaire très inférieur à 50%, qui garantit une bonne isolation thermique du bâtiment ou de l'habitacle. Le vitrage selon l'exemple 4 est configuré pour favoriser une forte transmission lumineuse dans le domaine du visible, ce qui explique la valeur plus élevée du facteur solaire. Celui-ci reste cependant proche de 50% et la sélectivité est parallèlement sensiblement augmentée et proche de 1, ce qui implique que les radiations situées dans le domaine de l'infrarouge sont au contraire des radiations lumineuses sélectivement réfléchies et/ou absorbées par le vitrage.

On peut voir sur la base du tableau 3 que les quatre vitrages présentent une couleur remarquablement neutre en transmission.

En ce qui concerne la colorimétrie en face interne du vitrage, que les vitrages selon les exemples 1 à 3 présentent une réflexion lumineuse R_{Lint} faible, ce qui permet une bonne vision de l'extérieur des occupants de l'immeuble ou de l'habitacle. Le vitrage selon l'exemple 4 présente une réflexion lumineuse intérieure sensiblement plus élevée, mais des valeurs a* et b* très neutres en réflexion interne, apparaissant ainsi incolore aux occupants de l'immeuble ou de l'habitacle.

On peut voir de manière générale que les valeurs des coefficients a* et b* sont relativement faibles et dans tous les cas inférieures ou égale à 5, ce qui traduit une relative neutralité de la couleur perçue aussi bien en réflexion qu'en transmission.

### Exemples comparatifs :

On peut comparer les propriétés des empilements de la demande WO 01/21540 citée précédemment.

L'exemple 4 de la demande WO01/21540 décrit une succession de couches dans l'empilement :

Verre / Si₃N₄ (10nm) / Nb (12 nm) / Si₃N₄ (17 nm)

Dans le tableau page 18 de cette publication il est indiqué que la transmission lumineuse est de 32,3% et la réflexion lumineuse R_{Lint} est de 25,3%. On peut calculer que le facteur solaire g est d'environ 36%.

Si la sélectivité est comparable à celle des vitrages selon l'invention, la valeur de la réflexion intérieure apparaît très élevée lorsque du niobium métallique est utilisé comme couche fonctionnelle réfléchissante/absorbante.

De même, l'exemple 6 de la demande WO01/21540 décrit une succession de couches dans l'empilement :
Verre / Si₃N₄ (10nm) / NbN (10 nm) / Si₃N₄ (15 nm)

Dans le tableau page 18 de cette publication, les valeurs reportées de T_{L} et de Runt sont respectivement égales à 31 et 28%. On peut modéliser que le facteur solaire g est d'environ 48% pour un tel empilement.

La sélectivité g calculé pour cette configuration (65%) est plus faible que celles obtenues pour les vitrages selon l'invention. En outre la réflexion extérieure est également beaucoup plus élevée pour cette configuration.

## Revendications

1. Article verrier transparent, comprenant au moins un substrat de verre muni sur au moins une de ses faces d'un revêtement constitué par un empilement de couches minces, ledit revêtement comprenant la succession de couches suivantes, par référence à la surface dudit substrat :
- une première couche comprenant du nitrure de niobium,
- une couche comprenant un oxyde transparent conducteur,
- une deuxième couche comprenant du nitrure de niobium,
dans lequel lesdites première et deuxième couches comprenant du nitrure de niobium sont directement au contact de la couche comprenant un oxyde transparent conducteur.

2. Article selon la revendication 1, dans lequel la couche comprenant un oxyde transparent conducteur a une épaisseur comprise entre 5 nm et 400 nm.

3. Article selon l'une des revendications précédentes, dans lequel la première couche comprenant du nitrure de niobium a une épaisseur comprise entre 1 et 50 nm.

4. Article selon l'une des revendications précédentes, dans lequel la seconde couche comprenant du nitrure de niobium a une épaisseur comprise entre 1 et 50 nm.

5. Article selon l'une des revendications précédentes, dans lequel l'oxyde transparent conducteur est choisi parmi les oxydes d'indium et d'étain (ITO), les oxydes de zinc et d'aluminium (AZO) les oxydes d'étain et d'antimoine (ATO), les oxydes d'indium et de zinc (IZO), de préférence les oxydes d'indium et d'étain (ITO).

6. Article selon l'une des revendications précédentes, dans lequel L'oxyde transparent conducteur est choisi parmi on oxyde d'étain dopé pour le rendre conducteur, de préférence par un élément de préférence choisi parmi F, Sb, Al, Ag, de préférence le fluor ou l'antimoine.

7. Article selon l'une des revendications précédentes, dans lequel la couche comprenant un oxyde transparent conducteur est plus épaisse que les première et seconde couches comprenant du nitrure de niobium.

8. Article selon l'une des revendications précédentes, **caractérisé en ce que** l'empilement ne comprend pas de couches fonctionnelles à base d'Ag, Au, Pt, Cu, Ni ou d'acier inoxydable.

9. Article selon l'une des revendications précédentes, dans lequel au moins une couche d'un matériau diélectrique est disposée au-dessus de ladite succession de couches, par référence à la surface dudit substrat.

10. Article selon l'une des revendications précédentes, dans lequel au moins une couche d'un matériau diélectrique est disposée au-dessous de ladite succession de couches, par référence à la surface dudit substrat.

11. Article selon l'une des revendications 9 ou 10, dans lequel le matériau diélectrique est choisi parmi les nitrures, en particulier le nitrure de silicium et le nitrure d'aluminium et leurs mélanges ou les oxydes, en particulier l'oxyde de silicium, l'oxyde de titane, l'oxyde d'étain, l'oxyde de zinc et leurs mélanges.

12. Article selon l'une des revendications précédentes, dans lequel une couche comprenant du nitrure de silicium est disposée au-dessus et/ou en dessous de ladite succession de couches.

13. Article selon la revendication précédente, dans lequel l'empilement comprend ou est constitué par la succession des couches suivantes, chaque couche étant au contact direct de la suivante :
SiNₓ/NbNₓ/TCO/NbNₓ/SiNₓ
dans lequel SiNₓ désigne des couches comprenant du nitrure de silicium, NbNₓ désigne des couches comprenant du nitrure de niobium et TCO désigne une couches comprenant un oxyde transparent conducteur, l'oxyde transparent conducteur étant de préférence un oxyde d'indium et d'étain.

14. Article selon l'une des revendications précédentes, dans lequel au moins une couche comprenant un oxyde métallique est présente entre la surface du substrat verrier et ladite succession de couches, l'oxyde métallique étant de préférence choisi parmi l'oxyde de silicium ou l'oxyde de titane.

15. Article selon l'une des revendications précédentes, dans lequel au moins une couche comprenant un oxyde métallique est présente au-dessus de ladite succession de couches, l'oxyde métallique étant de préférence choisi parmi l'oxyde de silicium, l'oxyde de titane, l'oxyde de zirconium ou un mélange de ces oxydes.

16. Article selon l'une des revendications précédentes, **caractérisé en ce qu'**il est trempé thermiquement et/ou bombé.

## Patentansprüche

1. Transparenter Glasartikel, umfassend mindestens ein Glassubstrat, das auf mindestens einer seiner Seiten mit einer Beschichtung versehen ist, die aus einer Stapelung von Dünnschichten besteht, wobei die Beschichtung die folgende Abfolge von Schichten umfasst, bezogen auf die Oberfläche des Substrats:
- eine erste Schicht, umfassend Niobnitrid,
- eine Schicht, umfassend ein leitendes transparentes Oxid,
- eine zweite Schicht, umfassend Niobnitrid,
wobei die erste und die zweite Schicht, umfassend Niobnitrid, direkt in Kontakt mit der Schicht, umfassend ein leitendes transparentes Oxid, steht.

2. Artikel nach Anspruch 1, wobei die erste Schicht, umfassend ein leitendes transparentes Oxid, eine Dicke zwischen 5 nm und 400 nm aufweist.

3. Artikel nach einem der vorstehenden Ansprüche, wobei die erste Schicht, umfassend Niobnitrid, eine Dicke zwischen 1 und 50 nm aufweist.

4. Artikel nach einem der vorstehenden Ansprüche, wobei die zweite Schicht, umfassend Niobnitrid, eine Dicke zwischen 1 und 50 nm aufweist.

5. Artikel nach einem der vorstehenden Ansprüche, wobei das leitende transparente Oxid ausgewählt ist aus Indiumzinnoxid (ITO), Zinkaluminiumoxid (AZO), Zinnantimonoxid (ATO), Indiumzinkoxid (IZO), vorzugsweise Indiumzinnoxid (ITO).

6. Artikel nach einem der vorstehenden Ansprüche, wobei das leitende transparente Oxid aus einem Zinnoxid ausgewählt ist, das dotiert ist, um es leitend zu machen, vorzugsweise mit einem Element, das vorzugsweise ausgewählt ist aus F, Sb, Al, Ag, vorzugsweise Fluor oder Antimon.

7. Artikel nach einem der vorstehenden Ansprüche, wobei die Schicht, umfassend ein leitendes transparentes Oxid, dicker als die erste und zweite Schicht, umfassend Niobnitrid, ist.

8. Artikel nach einem der vorstehenden Ansprüche,
**dadurch gekennzeichnet, dass** die Stapelung keine Funktionsschichten auf der Basis von Ag, Au, Pt, Cu, Ni oder rostfreiem Stahl umfasst.

9. Artikel nach einem der vorstehenden Ansprüche, wobei mindestens eine Schicht aus einem dielektrischen Material über der Abfolge von Schichten angeordnet ist, bezogen auf die Oberfläche des Substrats.

10. Artikel nach einem der vorstehenden Ansprüche, wobei mindestens eine Schicht aus einem dielektrischen Material unter der Abfolge von Schichten angeordnet ist, bezogen auf die Oberfläche des Substrats.

11. Artikel nach einem der Ansprüche 9 oder 10, wobei das dielektrische Material ausgewählt ist aus Nitriden, insbesondere Siliciumnitrid und Aluminiumnitrid und Gemischen davon, oder Oxiden, insbesondere Siliciumoxid, Titanoxid, Zinnoxid, Zinkoxid und Gemischen davon.

12. Artikel nach einem der vorstehenden Ansprüche, wobei eine Schicht, umfassend Siliciumnitrid, über und/oder unter der Abfolge von Schichten angeordnet ist.

13. Artikel nach dem vorstehenden Anspruch, wobei die Stapelung die Abfolge der folgenden Schichten umfasst oder aus dieser besteht, wobei jede Schicht in direktem Kontakt mit Folgendem steht:
SiNₓ/NbNₓ/TCO/NbNₓ/SiNₓ
wobei SiNₓ Schichten bezeichnet, umfassend Siliciumnitrid, NbNₓ Schichten bezeichnet, umfassend Niobnitrid, und TCO eine Schicht bezeichnet, umfassend ein leitendes transparentes Oxid, wobei das leitende transparente Oxid vorzugsweise ein Indiumzinnoxid ist.

14. Artikel nach einem der vorstehenden Ansprüche, wobei mindestens eine Schicht, umfassend ein Metalloxid, zwischen der Oberfläche des Glassubstrats und der Abfolge von Schichten vorhanden ist, wobei das Metalloxid vorzugsweise ausgewählt ist aus Siliciumoxid oder Titanoxid.

15. Artikel nach einem der vorstehenden Ansprüche, wobei mindestens eine Schicht, umfassend ein Metalloxid, über der Abfolge von Schichten vorhanden ist, wobei das Metalloxid vorzugsweise ausgewählt ist aus Siliciumoxid, Titanoxid, Zirkoniumoxid oder einem Gemisch dieser Oxide.

16. Artikel nach einem der vorstehenden Ansprüche,
**dadurch gekennzeichnet, dass** er wärmegehärtet und/oder gebogen ist.

## Claims

1. A transparent glass item, comprising at least one glass substrate which is provided, on at least one of its faces, with a coating consisting of a stack of thin layers, said coating comprising the succession of following layers, with reference to the surface of said substrate:
- a first layer comprising niobium nitride,
- a layer comprising a transparent conductive oxide,
- a second layer comprising niobium nitride,
wherein said first and second layers comprising niobium nitride are directly in contact with the layer comprising a transparent conductive oxide.

2. The item according to claim 1, wherein the layer comprising a transparent conductive oxide has a thickness of between 5 nm and 400 nm.

3. The item according to either of the preceding claims, wherein the first layer comprising niobium nitride has a thickness of between 1 and 50 nm.

4. The item according to any of the preceding claims, wherein the second layer comprising niobium nitride has a thickness of between 1 and 50 nm.

5. The item according to any of the preceding claims, wherein the transparent conductive oxide is selected from indium tin oxides (ITO), aluminum zinc oxides (AZO), antimony tin oxides (ATO) and indium zinc oxides (IZO), preferably indium tin oxides (ITO).

6. The item according to any of the preceding claims, wherein the transparent conductive oxide is selected from doped tin oxide to make it conductive, preferably with an element preferably selected from F, Sb, Al and Ag, preferably fluorine or antimony.

7. The item according to any of the preceding claims, wherein the layer comprising a transparent conductive oxide is thicker than the first and second layers comprising niobium nitride.

8. The item according to any of the preceding claims, **characterized in that** the stack does not comprise functional layers based on Ag, Au, Pt, Cu, Ni, or stainless steel.

9. The item according to any of the preceding claims, wherein at least one layer of a dielectric material is arranged above said succession of layers, with reference to the surface of said substrate.

10. The item according to any of the preceding claims, wherein at least one layer of a dielectric material is arranged below said succession of layers, with reference to the surface of said substrate.

11. The item according to either claim 9 or claim 10, wherein the dielectric material is selected from nitrides, in particular silicon nitride and aluminum nitride and mixtures thereof, or oxides, in particular silicon oxide, titanium oxide, tin oxide, zinc oxide and mixtures thereof.

12. The item according to any of the preceding claims, wherein a layer comprising silicon nitride is arranged above and/or below said succession of layers.

13. The item according to the preceding claim, wherein the stack comprises or consists of the succession of the following layers, each layer being in direct contact with the following:
SiNₓ/NbNₓ/TCO/NbNₓ/SiNₓ
where SiNₓ denotes layers comprising silicon nitride, NbNₓ denotes layers comprising niobium nitride and TCO denotes a layer comprising a transparent conductive oxide, the transparent conductive oxide preferably being an indium tin oxide.

14. The item according to any of the preceding claims, wherein at least one layer comprising a metal oxide is present between the surface of the glass substrate and said succession of layers, the metal oxide preferably being selected from silicon oxide or titanium oxide.

15. The item according to any of the preceding claims, wherein at least one layer comprising a metal oxide is present above said succession of layers, the metal oxide preferably being selected from silicon oxide, titanium oxide, zirconium oxide or a mixture of these oxides.

16. The item according to any of the preceding claims, **characterized in that** it is thermally tempered and/or bent.
